# NEUE EUROPÄISCHE PATENTSCHRIFT

(11) **EP 0 681 127 B2**
(45) Veröffentlichungstag und Bekanntmachung des Hinweises auf die Entscheidung über den Einspruch: **13.08.2003**
(45) Hinweis auf die Patenterteilung: 15.07.1998
(21) Anmeldenummer: 95106606.7
(22) Anmeldetag: 03.05.1995
(51) Int. Cl.: F16K 27/04, E03C 1/04

(54) **Wasserarmatur**
Water fitting
Robinet d'eau

(30) Priorität: 05.05.1994 DE 4415797
(43) Veröffentlichungstag der Anmeldung: 08.11.1995
(73) Patentinhaber: Friedrich Grohe AG & Co. KG, 58675 Hemer (DE)
(72) Erfinder: Pawelzik, Manfred, D-59494 Soest (DE); Derr, Max, D-58640 Iserlohn (DE); Kahle, Dieter, D-58636 Iserlohn (DE)

(56) Entgegenhaltungen:
- EP-A- 0 293 655
- DE-A- 3 332 773
- DE-A- 3 707 705
- DE-C- 621 831
- DE-C- 1 249 028
- DE-U- 8 501 282
- DE-U- 9 304 056
- US-A- 682 250
- Handbuch der Verbindungstechnik, Seite 302, Carl Hauser Verlag, 1991
- Einführung in die DIN-Normen, Seiten 365-371, Beuth Verlag, 1980

## Beschreibung

Die Erfindung betrifft eine Wasserarmatur, insbesondere Einlochmischbatterie für Wasch- und/oder Spültische o.dgl., mit einem wenigstens eine Anschlußöffnung für den Wasserzufluß und eine Wasserauslaßöffnung aufweisenden Gehäuse, wobei im Gehäuse ein Aufnahmeraum für einen Ventilkartuscheneinsatz ausgebildet ist, in dem jede Wasserzuflußleitung in einer eigenen Anschlußöffnung angeordnet ist, in der Stecklage an der Innenseite eines Gehäusebodens mit einem Ringbund axial abgestützt ist und mit wenigstens einem Dichtring gedichtet in den Ventilkartuscheneinsatz hineingeführt ist.
Derartige Wasserarmaturen sind bekannt, wobei die Wasserzuflußleitungen mit ihren für den Anschluß an das Versorgungsleitungsnetz vorgesehenen, relativ langen Bereich von dem Aufnahmeraum aus durch die Anschlußöffnungen geschoben werden müssen. Dieses ist relativ aufwendig und erfordert einen kleinen Durchmesser für die Zuflußleitung.

Der Erfindung liegt die Aufgabe zugrunde, die bekannte Anschlußvorrichtung zu verbessern und insbesondere ein kostengünstiges, variables und sicheres Stecksystem für die Zuflußleitungen zu schaffen, bei dem auch Schläuche als Zuflußleitung eingesetzt werden können.

Diese Aufgabe wird erfindungsgemäß mit den Merkmalen des Anspruchs 1 gelöst.
Weitere Ausgestaltungen der Erfindung sind in den Ansprüchen 2 bis 10 angegeben.

Mit den erfindungsgemäßen Maßnahmen wird insbesondere erreicht, daß die Zuflußleitungen lediglich mit dem relativ kurzen Steckteil jeweils durch die Anschlußöffnung geschoben werden braucht. Der relativ lange Anschlußteil der Zuflußleitung für den Versorgungsleitungsanschluß kann daher einen größeren Durchmesser aufweisen. Für den Anschluß können somit auch Schläuche vorgesehen werden. Nach dem Einschnappen des als Sicherungsring wirkenden Sprengrings in die Ringnut und dem Aufsetzen des Ventilkartuscheneinsatzes ist der Sprengring sowohl axial als auch radial formschlüssig gehalten und verriegelt. Darüber hinaus ist bei der erfindungsgemäßen Ausbildung eine Änderung des bisher benutzten Wasserarmaturengehäuses und des Ventilkartuscheneinsatzes nicht erforderlich, so daß alternativ auch die bisher bekannten Anschlußrohre mit angebördeltem Ringbund eingesetzt werden können.
Die erfindungsgemäß vorgeschlagenen Maßnahmen können sowohl bei einem Wassermischventil als auch bei einem Mengenregulierventil verwirklicht werden.

Ein Ausführungsbeispiel der Erfindung ist in der Zeichnung dargestellt und wird im folgenden näher beschrieben. Es zeigt:
- Figur 1: eine Einlochwaschtischbatterie im Längsschnitt;
- Figur 2: einen Teil der in Figur 1 gezeigten Einlochwaschtischbatterie um 90° gedreht im Längsschnitt;
- Figur 3: einen in Figur 2 gezeigten Anschlußschlauch im Längsschnitt;
- Figur 4: einen in Figur 2 gezeigten Sprengring in vergrößerter Darstellung im Seitenschnitt;
- Figur 5: den in Figur 4 gezeigten Sprengring in Draufsicht.

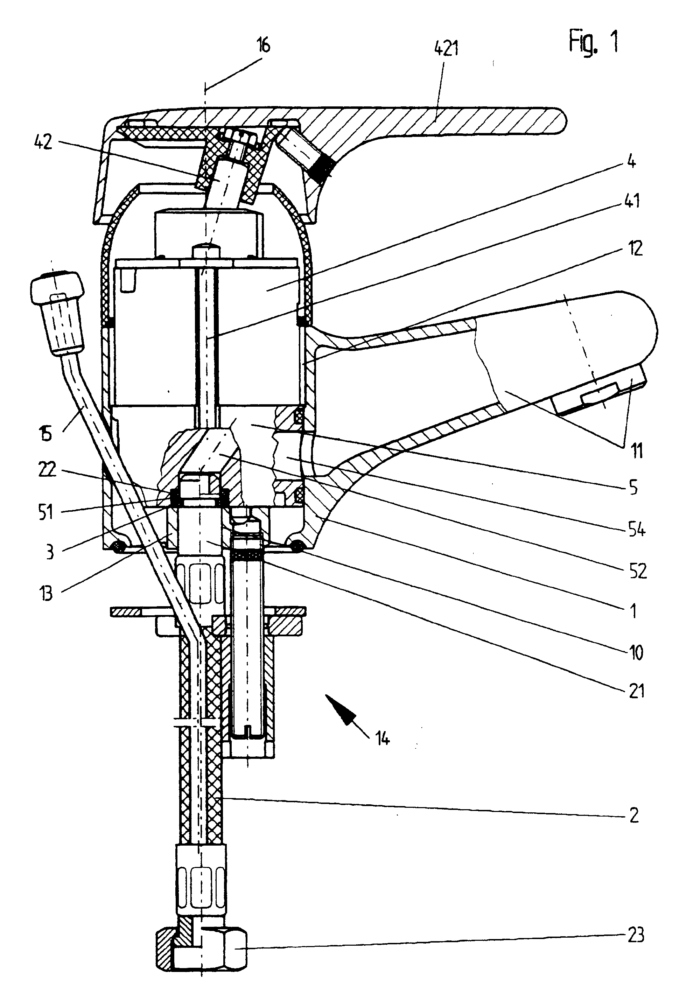

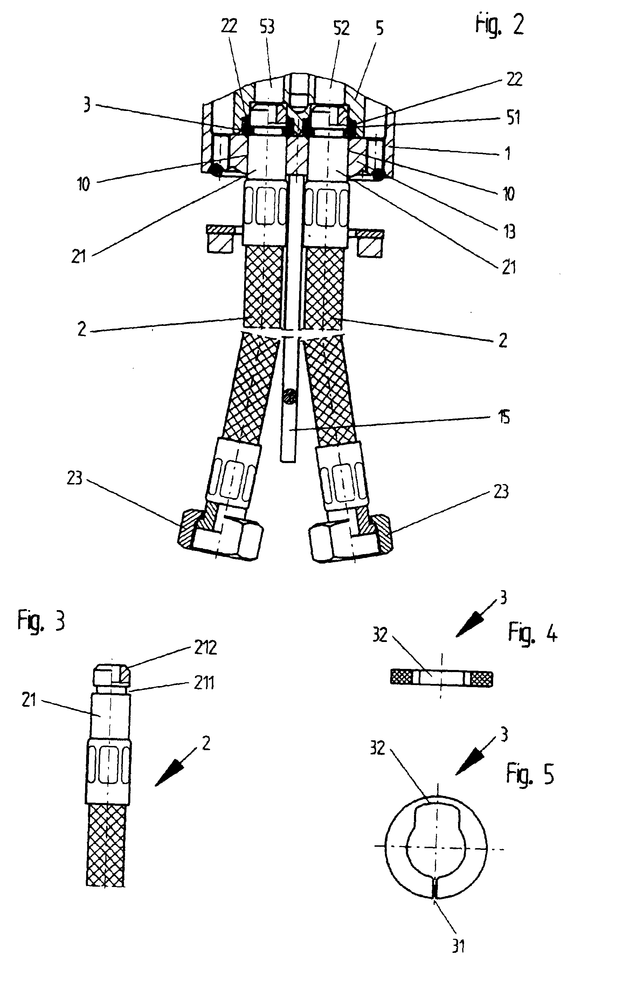

In der Zeichnung Figur 1 ist ein Eingriffmischventil als Einlochwaschtischbatterie dargestellt. In einem Gehäuse 1 ist ein Aufnahmeraum 12 vorgesehen, der im unteren Bereich durch einen Gehäuseboden 13 abgeschlossen wird. In dem Gehäuseboden 13 sind zwei Anschlußöffnungen 10 ausgebildet, durch die jeweils ein Schlauch 2 mit einem Steckerteil 21 für die Zuführung von Kalt- und Warmwasser hindurchgeführt ist. An dem Gehäuseboden 13 ist außerdem eine Befestigungsvorrichtung 14 gehaltert, mit der die Einlochmischbatterie an einem Durchbruch eines in der Zeichnung nicht dargestellten Waschtisches befestigbar ist. Die beiden Schläuche 2 sowie ein Betätigungsgestänge 15 für ein in der Zeichnung ebenfalls nicht dargestelltes Ablaufventil sind ebenfalls durch den Durchbruch des nicht dargestellten Waschtisches hindurchgeführt. Die beiden Schläuche 2 können mit einer stromaufwärts angeordneten Uberwurtmutterverschraubung 23 jeweils an das entsprechende Versorgungsnetz angeschlossen werden. In dem Aufnahmeraum 12 ist ein Ventilkartuscheneinsatz, bestehend aus einer Ventilpatrone 4 und einem Formstück 5, angeordnet, wobei die beiden Teile von zwei diametral gegenüberliegend angeordneten Spannschrauben 41 gegen den Gehäuseboden 13 gedrückt werden. In der Ventilpatrone 4 sind bekannte Ventilelemente gekapselt angeordnet, mit denen über einen Stellhebel 42, an dem ein Handhebel 421 befestigt ist, durch ein Verschwenken um die Mittelachse 16 das Mischungsverhältnis von Kalt- und Warmwasser bzw. die Mischwassertemperatur und durch ein Aufoder Abbewegen die gesamte Durchflußmenge pro Zeiteinheit einstellbar ist. In dem unter der Ventilpatrone 4 angeordneten Formstück 5 sind Aufnahmebohrungen 51 für die beiden Steckerteile 21 ausgebildet. Außerdem sind in dem Formstück 5 jeweils eine Kaltwasserführung 52, eine Warmwasserführung 53 und eine Mischwasserführung 54 eingeformt, die jeweils einen dichten Ubergang zur Ventilpatrone 4 gewährleisten. Die Mischwasserführung 54 leitet dabei stromabwärts das in der Ventilpatrone 4 erzeugte Mischwasser in einen Wasserauslaß 11 des Gehäuses 1, von dem es über ein Auslaufmundstück als Freistrahl austritt.
Die Schläuche 2 sind in der Stecklage, wie es aus Figur 1 und Figur 2 zu entnehmen ist, jeweils mit einem Sprengring 3, der in einer Ringnut 211 des Steckerteils 21 eingerastet ist, axial gesichert, wobei der Sprengring 3 jeweils von der Aufnahmebohrung 51 radial verriegelt ist. Oberhalb des Sprengrings 3 ist ein Dichtring 22 in Form eines O-Rings angeordnet, mit dem die dichte Verbindung des Steckerteils 21 mit dem Formstück 5 gewährleistet ist.

Der Sprengring 3 weist einen Radialschlitz 31 sowie eine dem Radialschlitz 31 gegenüberliegende Ausnehmung 32 an der Innenwandung auf, wie es insbesondere aus Figur 4 und 5 zu entnehmen ist. Beim Aufstreifvorgang auf das jeweilige Steckerteil 21 kann somit der Sprengring 3 scharnierartig im Bereich der Ausnehmung 32 aufgespreizt werden. Der Sprengring 3 ist aus Kunststoff hergestellt, was besonders kostengünstig ist. Damit ein leichtes Aufstreifen auf das Steckerteil 21 ermöglicht wird, ist, wie es insbesondere aus Figur 3 der Zeichnung zu entnehmen ist, die Stirnseite des Steckerteils 21 mit einer konischen Fase 212 versehen.

Die Montage der Schläuche 2 kann in folgender Weise erfolgen:
Zunächst werden die beiden Schläuche 2 mit ihren Stekkerteilen 21 in die Anschlußöffnungen 10 des Gehäusebodens 13 bei noch leerem Aufnahmeraum 12 eingeschoben. Hiernach wird jeweils ein Sprengring 3 axial vom Aufnahmeraum 12 aus auf die Steckerteile 21 aufgeschoben und in der Ringnut 211 verrastet. Danach kann jeweils eine Dichtung 22 auf das Steckerteil 21 aufgeschoben werden.
Hiernach wird der Ventilkartuscheneinsatz, bestehend aus Formstück 5, Ventilpatrone 4 und Spannschrauben 41 in den Aufnahmeraum 12 eingesetzt, wobei die Aufnahmebohrungen 51 über die beiden Steckerteile 21 gleiten und bei der Anlage am Gehäuseboden 13 den Sprengring 3 in seiner Schnapposition radial verriegeln. Nach dem Anziehen der Spannschrauben 41 sind somit die beiden Schläuche 2 fest und dicht mit dem Formstück 5 und der Ventilpatrone 4 verbunden. Um eine besonders gute axiale Anlage der Dichtung 22 zu gewährleisten, kann zusätzlich auf dem Sprengring 3 noch eine Unterlegscheibe (in der Zeichnung nicht dargestellt) angeordnet werden. Hiernach kann in bekannter Weise die Einlochwaschtischbatterie fertig montiert werden.
Die Demontage der Schläuche 2 erfolgt in umgekehrter Reihenfolge.

Bei dem vorstehend beschriebenen Ausführungsbeispiel erfolgt die radiale Verriegelung der beiden Sprengringe 3 jeweils von einer Aufnahmebohrung 51 in dem Formstück 5. Selbstverständlich kann die radiale Verriegelung der Sprengringe 3 beispielsweise auch von jeweils einer im Gehäuseboden 13 vom Aufnahmeraum 12 aus konzentrisch zur Anschlußöffnung 10 vorgesehenen Aussenkung erfolgen.

## Patentansprüche

1. Wasserarmatur, insbesondere Einlochmischbatterie für Wasch- und/oder Spültische o. dgl., mit einem wenigstens eine Anschlußöffnung (10) für den Wasserzufluß und eine Wasserauslaßöffnung (11) aufweisenden Gehäuse (1), wobei im Gehäuse (1) ein Aufnahmeraum (12) für einen Ventilkartuscheneinsatz (4,5) ausgebildet ist, in dem jede Wasserzuflußleitung (2) in einer eigenen Anschlußöffnung (10) angeordnet ist, in der Stecklage an der Innenseite eines Gehäusebodens (13) mit einem Ringbund axial abgestützt ist und mit wenigstens einem Dichtring (22) gedichtet in den Ventilkartuscheneinsatz (4,5) hineingeführt ist, wobei der Ringbund als separater Sprengring (3) ausgebildet ist, der in der Stecklage in eine Ringnut (211) eines Steckerteils (21) der Zuflußleitung (2) einbringbar ist und der Sprengring (3) in seiner Raststellung in der Ringnut (211) von dem eingebauten Ventilkartuscheneinsatz im Gehäuse (1) verriegelt ist.

2. Wasserarmatur nach Anspruch 1, **dadurch gekennzeichnet, daß** die radiale Verriegelung des Sprengrings (3) in seiner Raststellung von einer im Ventilkartuscheneinsatz vorgesehenen Aufnahmebohrung (51) erfolgt.

3. Wasserarmatur nach Anspruch 1, **dadurch gekennzeichnet, daß** die radiale Verriegelung des Sprengrings (3) in seiner Raststellung von einer im Gehäuseboden (13) vorgesehenen Aussenkung erfolgt.

4. Wasserarmatur nach einem der Ansprüche 1 bis 3, **dadurch gekennzeichnet, daß** das Steckerteil (21) eine konische Fase (212) aufweist, mit der der Sprengring (3) beim Überstreifen elastisch aufgeweitet wird.

5. Wasserarmatur nach einem der Ansprüche 1 bis 4, **dadurch gekennzeichnet, daß** der Sprengring (3) oder eine auf den Sprengring (3) anordbare Unterlegscheibe den Axialanschlag für einen Dichtring (22) bildet, mit dem die Abdichtung zwischen dem Stekkerteil (21) und dem Ventilkartuscheneinsatz erfolgt.

6. Wasserarmatur nach einem der Ansprüche 1 bis 5, **dadurch gekennzeichnet, daß** jede Zuflußleitung als druckfester Schlauch (2) mit einem Steckerteil (21) ausgebildet ist.

7. Wasserarmatur nach einem der Ansprüche 1 bis 6, **dadurch gekennzeichnet, daß** der Sprengring (3) aus Kunststoff hergestellt ist.

8. Wasserarmatur nach einem der Ansprüche 1 bis 7, **dadurch gekennzeichnet, daß** der Sprengring (3) einen Radialschlitz (31) für die elastische Aufweitung hat.

9. Wasserarmatur nach Anspruch 8, **dadurch gekennzeichnet, daß** der Sprengring (3) an der dem Radialschlitz (31) gegenüberliegenden Innenwandung eine nutförmige Ausnehmung (32) aufweist, die ein scharnierartiges, elastisches Spreizen des Sprengrings (3) ermöglicht.

10. Wasserarmatur nach einem der Ansprüche 1 bis 9, **dadurch gekennzeichnet, daß** der Ventilkartuscheneinsatz aus einer Ventilpatrone (4) und einem Formstück (5) mit Wasserführungen (52,53,54) besteht.

## Claims

1. Sanitary fitting, especially a pillar mixer for wash basins and/or sinks or the like, with a housing (1) having at least one opening (10) for connection of the water supply and a water discharge opening (11), a receiving chamber (12) for a valve cartridge insert (4, 5) being formed in the housing (1), in which receiving chamber each water supply pipe (2) is arranged in its own connection opening (10), in the inserted state is supported axially at the inside of a housing base (13) with an annular collar and is introduced, sealed by at least one sealing ring (22), into the valve cartridge insert (4, 5), wherein the annular collar is in the form of a separate spring ring (3) which, in the inserted state, is arranged to be introduced into an annular groove (211) of a plug-in part (21) of the supply pipe (2), and the spring ring (3) is locked in its snap-in position in the annular groove (211) by the installed valve cartridge insert in the housing (1).

2. Sanitary fitting according to claim 1, **characterised in that** radial locking of the spring ring (3) in its snap-in position is effected by a receiving bore (51) provided in the valve cartridge insert.

3. Sanitary fitting according to claim 1, **characterised in that** radial locking of the spring ring (3) in its snap-in position is effected by a recess provided in the housing base (13).

4. Sanitary fitting according to any one of claims 1 to 3, **characterised in that** the plug-in part (21) has a conical bevel (212) by means of which the spring ring (3) is resiliently expanded as it slips thereover.

5. Sanitary fitting according to any one of claims 1 to 4, **characterised in that** the spring ring (3) or a washer positionable on the spring ring (3) forms the axial stop member for a sealing ring (22) with which the seal between the plug-in part (21) and the valve cartridge insert is effected.

6. Sanitary fitting according to any one of claims 1 to 5, **characterised in that** each supply pipe is in the form of a pressure-resistant hose (2) having a plug-in part (21).

7. Sanitary fitting according to any one of claims 1 to 6, **characterised in that** the spring ring (3) is made of plastics material.

8. Sanitary fitting according to any one of claims 1 to 7, **characterised in that** the spring ring (3) has a radial slot (31) for resilient expansion.

9. Sanitary fitting according to claim 8, **characterised in that**, on the inner wall lying opposite the radial slot (31), the spring ring (3) has a channel-shaped recess (32) which enables the spring ring (3) to open out resiliently in the manner of a hinge.

10. Sanitary fitting according to any one of claims 1 to 9, **characterised in that** the valve cartridge insert consists of a valve cartridge (4) and a shaped member (5) with water channels (52, 53, 54).

## Revendications

1. Robinet à eau, en particulier robinet mitigeur à écoulement unique pour évier, lavabo ou similaire, comportant un boîtier (1) présentant, au moins un orifice de raccordement (10) à l'amenée d'eau et un orifice de sortie d'eau (11) dans lequel le boîtier (1) contient une chambre (12) servant à loger un insert contenant une cartouche de soupapes (4, 5) dans laquelle chaque conduite d'arrivée d'eau est disposée dans une seule ouverture de raccordement (10) repose en appui axial en position montée par l'intermédiaire d'un collet annulaire, sur la face interne du fond du boîtier (13) et pénètre dans la cartouche (4, 5), avec étanchéité assurée par au moins un joint annulaire (22), le collet annulaire étant un circlip (3) qui, en position de montage, peut venir se loger dans une gorge annulaire (211) d'une pièce de connexion (21) appartenant à la canalisation d'amenée (2), et ce circlip se trouvant verrouillé dans la gorge annulaire (211) lorsque l'insert à cartouche de soupapes est verrouillé dans le boîtier (1).

2. Robinet selon la revendication 1,
**caractérisé en ce que**
le verrouillage radial du circlip (3) en position d'arrêt est assuré par un alésage de réception (51) prévu dans l'insert à cartouche de soupapes.

3. Robinet selon la revendication 1,
**caractérisé en ce que**
le verrouillage radial du circlip (3) en position d'arrêt est assuré par un renfoncement prévu dans le fond du boîtier (13).

4. Robinet selon une des revendications 1 à 3,
**caractérisé en ce que**
la pièce de connexion (21) présente un chanfrein conique (212) qui dilate élastiquement le circlip (3) au passage à travers celui-ci.

5. Robinet selon les revendications 1 à 4,
**caractérisé en ce que**
le circlip (3), ou une sous-rondelle montable sur celui-ci constitue la butée axiale pour une bague d'étanchéité (22) assurant l'étanchéité entre la pièce de connexion (21) et l'insert à cartouche de soupapes.

6. Robinet selon les revendications 1 à 5,
**caractérisé en ce que**
chaque canalisation d'amenée est constituée par un tuyau (2) résistant à la pression et équipé d'une pièce de connexion (21).

7. Robinet selon les revendications 1 à 6,
**caractérisé en ce que**
le circlip (3) est en matière plastique.

8. Robinet selon les revendications 1 à 7,
**caractérisé en ce que**
le circlip (3), pour permettre son élargissement élastique, présente une fente radiale (31).

9. Robinet selon la revendication 8,
**caractérisé en ce que**
le circlip (3) présente sur la paroi interne opposée à la fente radiale (31), un évidement en forme d'encoche permettant d'écarter élastiquement le circlip (3), à la manière d'une charnière.

10. Robinet selon les revendications 1 à 9,
**caractérisé en ce que**
l'insert à cartouche de soupapes est constitué d'une cartouche de soupapes (4) et d'une pièce moulée (5) comportant les passages de guidage de l'eau (52, 53, 54).
